Europäisches Patentamt

(19)     European Patent Office

Office européen des brevets          (11)     **EP 0 768 803 A1**

(12)                          **DEMANDE DE BREVET EUROPEEN**

(43) Date de publication:                     (51) Int. Cl.⁶: **H04Q 7/32**, H04M 1/72
     **16.04.1997 Bulletin 1997/16**

(21) Numéro de dépôt: **96202795.9**

(22) Date de dépôt: **08.10.1996**

(84) Etats contractants désignés:
     **DE FI FR GB SE**

(30) Priorité: **11.10.1995 FR 9511936**

(71) Demandeurs:
     • **PHILIPS ELECTRONIQUE GRAND PUBLIC**
       **92150 Suresnes (FR)**
       Etats contractants désignés:
       **FR**
     • **Philips Electronics N.V.**
       **5621 BA  Eindhoven (NL)**
       Etats contractants désignés:
       **DE FI GB SE**

(72) Inventeurs:
     • **Sandre, Benoît**
       **75008 Paris (FR)**
     • **Touzeau, Patrick**
       **75008 Paris (FR)**

(74) Mandataire: **Caron, Jean**
       **Société Civile S.P.I.D.**
       **156, Boulevard Haussmann**
       **75008 Paris (FR)**

(54)     **Protocole pour la scrutation de signaux de signalisation dans un téléphone sans fil**

(57)     On sélectionne d'abord un canal (SCN), et on commence immédiatement à mesurer le champ reçu et à chercher des données numériques codées Manchester ; les signaux numériques de signalisation sont 100% codé Manchester. Après un délai prédéterminé (D1), on teste le niveau de porteuse (L>T), et on l'enregistre dans une mémoire. La valeur la plus petite parmi les différentes valeurs enregistrées est finalement sélectionnée, une valeur fixe y est ajoutée, et la valeur ainsi obtenue (T) est prise à l'avenir comme valeur de seuil pour le test de niveau. Si le canal est libre, on recommence (SCN) avec un autre canal. Si le canal est occupé, on attend encore (D2), puis on procède à un test (M?) pour savoir si des données ont été reconnues. Si rien n'a été reconnu, on recommence (SCN) avec un autre canal.
Applications : téléphone sans fil

FIG. 2

EP 0 768 803 A1

## Description

La présente invention concerne un protocole de transmission de signaux numériques de signalisation dans un appareil téléphonique dit sans-fil, comprenant une partie, dite base, et une partie, dite mobile ; la base et le mobile comportant chacun un circuit d'émission/réception pour émettre ou recevoir les dits signaux numériques par voie hertzienne, au moyen d'une porteuse modulée, pour laquelle plusieurs canaux sont prévus, qui diffèrent par leur fréquence ; protocole dans lequel la base et le mobile, en dehors d'une communication, procèdent périodiquement à un test appelé scrutation, pour déterminer si un signal hertzien est émis, test dans lequel le circuit de réception est d'abord positionné sur un canal, puis au bout d'un délai prédéterminé dit premier délai, la présence d'une émission est testée en comparant une valeur de mesure du champ reçu avec un seuil prédéterminé et, s'il n'y a pas d'émission, le circuit de réception est positionné sur un canal suivant.

L'invention concerne aussi un système téléphonique, comprenant une partie, dite base, et une partie, dite mobile, la base et le mobile comportant tous deux un circuit de transmission pour émettre ou recevoir des signaux numériques par voie hertzienne, au moyen d'une porteuse modulée, pour laquelle plusieurs canaux sont prévus, qui diffèrent par leur fréquence, la base et le mobile étant munis chacun de moyens pour positionner le circuit de réception sur un canal, de moyens pour, au bout d'un délai prédéterminé dit premier délai, tester s'il y a une émission en vérifiant si la valeur du champ reçu dépasse un seuil prédéterminé et, s'il n'y a pas d'émission, positionner le circuit de réception sur un canal suivant.

Un téléphone dans lequel il est procédé à une scrutation de ce genre est connu de EP 0 522 885.

Le mobile est alimenté par une batterie rechargeable, et son autonomie, c'est-à-dire le temps pendant lequel il peut rester séparé de la base, dépend de la taille de la batterie et de la consommation des circuits du mobile, en service mais aussi en veille. Lorsque l'usager désire utiliser la ligne téléphonique et qu'il appuie à cet effet sur une touche, ou lorsqu'un appel arrive sur la ligne, une "demande d'établissement de lien" est émise et répétée en vue d'établir une liaison radio appelée lien entre la base et le mobile ; le lien n'est pas établi immédiatement, mais seulement lorsqu'une scrutation a détecté cette demande d'établissement de lien. Plus la scrutation a lieu souvent, plus le temps de réponse est réduit, mais plus la consommation en veille est importante.

Plusieurs canaux sont définis, et on désire pouvoir choisir un canal diférent, selon les circonstances. Il y a par exemple 10 canaux. En préalable à toute utilisation, il faut donc effectuer une scrutation pour choisir un canal, ce qui demande un délai. La scrutation est un des points critiques qui font la qualité d'un téléphone sans fil puisque le temps de réponse en dépend, ainsi que l'autonomie du mobile, ou la taille de sa batterie, ainsi que la fiabilité de l'établissement du lien radio.

Un objet de l'invention est d'améliorer les critères de choix d'un canal, dans un temps de scrutation court.

Selon l'invention, pendant la scrutation, la valeur du champ est relevée pour chacun des canaux successivement utilisés, la valeur la plus petite parmi ces différentes valeurs est finalement sélectionnée, une valeur fixe y est ajoutée, et la valeur ainsi obtenue est prise comme valeur du dit seuil prédéterminé.

Une telle détermination dynamique (c'est-à-dire susceptible de changer en cours d'utilisation) de la valeur du seuil permet d'adapter la valeur du seuil en fonction, entre autres, du niveau de bruit reçu par l'antenne, et donc d'avoir un fonctionnement optimal, car adapté à chaque environnement.

De préférence, les signaux numériques sont tous codés de la même manière et, au cours d'une scrutation destinée à rechercher si une autre partie veut établir une liaison, un décodeur pour décoder les dits signaux numériques est mis en service dès le début de la scrutation, et lorsqu'une émission est considérée comme reçue au bout du premier délai, le décodeur est laissé en service puis, au bout d'un délai prédéterminé, dit second délai, on vérifie si le décodeur a bien reconnu le codage du signal reçu, et

- si le décodeur a bien reconnu le codage, on le laisse continuer à décoder,
- si le décodeur n'a pas reconnu le codage, le circuit de réception est positionné sur un canal suivant, pour y appliquer le même processus.

Le fait que la recherche soit basée sur la simple détection d'un type de codage, et non sur la recherche d'un message déterminé, permet de diminuer le temps passé sur un canal occupé, car, du fait que l'ensemble d'une trame de demande d'établissement de lien est codé selon un même code, il est possible, à n'importe quel moment, de détecter si une telle trame est en cours de transmission.

Avantageusement, la totalité des signaux numériques de signalisation est codée en codage de type Manchester, et un bit d'un signal numérique de signalisation est considéré comme reconnu si une transition est détectée à un instant prévu, indiqué par une horloge.

Un tel codage est facile à reconnaître.

Le codage du signal reçu est considéré comme reconnu par le décodeur si un nombre prédéterminé de bits consécutifs ont été décodés sans erreur.

Dans un système téléphonique, un processeur dans la base et un processeur dans le mobile comportent chacun un programme pour relever les différentes valeurs de champ qui sont mesurées pour chacun des canaux, et pour déterminer un seuil en ajoutant une valeur fixe à la plus petite valeur de champ ainsi relevée.

De préférence, chacun des processeurs, celui de la base comme celui du mobile, est muni de moyens pour mettre en service dès le début d'une scrutation un décodeur pour décoder les dits signaux numériques, afin d'essayer de décoder un éventuel signal numérique reçu, de moyens pour, lorsqu'une émission est considérée comme reçue au bout du premier délai, laisser fonctionner le décodeur pendant encore un délai prédéterminé, dit second délai, et de moyens pour, au bout du second délai, vérifier si le décodeur a reconnu le codage du signal reçu et dans ce cas le laisser fonctionner, ou bien, si le décodeur n'a pas reconnu le codage du signal reçu, positionner le circuit de réception sur un canal suivant.

Ces aspects de l'invention ainsi que d'autres aspects plus détaillés apparaîtront plus clairement grâce à la description suivante d'un mode de réalisation constituant un exemple non limitatif.

La figure 1 représente le schéma d'un système téléphonique dans lequel l'invention s'applique.

La figure 2 est un organigramme du processus de scrutation.

La figure 3 est un diagramme de temps d'un exemple de séquence de scrutation.

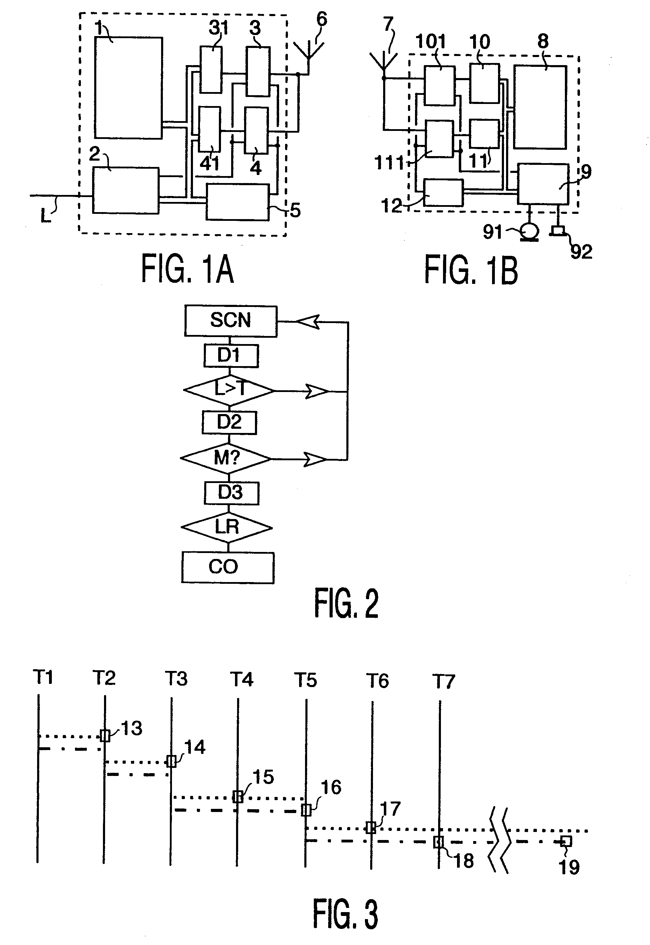

L'appareil téléphonique représenté par la figure 1 comporte deux éléments: en A une base et en B un mobile.

La base comporte un module d'interface 2 avec une ligne téléphonique L, module connu en soi, qui est relié, pour communiquer avec le mobile, à un module d'émission radio 3 et un module de réception radio 4, tous deux reliés à une antenne 6. Un décodeur 41 est relié au module de réception radio 4 pour décoder des données numériques. Un encodeur 31 est relié au module d'émission radio 3 pour encoder des données numériques. Pour permettre le choix d'une fréquence de canal à la demande, la base est munie d'un synthétiseur de fréquences 5 connu, avec une boucle de mesure de phase pour le réglage de la fréquence, dit "circuit PLL". Elle comporte en outre un microprocesseur 1 pour gérer différentes fonctions, entre autres la conduite d'un processus de scrutation. Ce microprocesseur 1 est relié, par un bus, au moins aux modules 2, 5, 31, 41 de la base, pour les commander ou en recevoir des informations.

Le mobile comporte un microphone 91 et un écouteur 92, pour la transmission de signaux acoustiques, reliés à un module de traitement audio 9, connu en soi. Pour la communication radio avec la base, il comporte un module d'émission radio 101 et un module de réception radio 111, tous deux reliés à une antenne 7. Un décodeur 11 est relié au module de réception radio 111 pour décoder des données numériques. Un encodeur 10 est relié au module d'émission radio 101 pour encoder des données numériques. Pour permettre le choix d'une fréquence de canal à la demande, le mobile est muni également d'un synthétiseur de fréquences 12 connu, avec une boucle de mesure de phase pour le réglage de la fréquence, dit "circuit PLL". Il comporte en outre un microprocesseur 8 pour gérer différentes fonctions, entre autres la conduite d'un processus de scrutation. Ce microprocesseur 8 est relié, par un bus, au moins aux modules 9, 10, 11, 12 du mobile, pour les commander ou en recevoir des informations.

Pour gérer la communication entre le mobile et la base, des données numériques sont utilisées ; elles sont constituées de paquets, également appelés trames, de longueur fixe. Une trame dure par exemple 90 mS. Une trame particulière, dite de demande d'établissement de lien, comporte entre autres un code d'identification du mobile et un code de demande d'établissement de lien. Une telle demande est susceptible d'être émise aussi bien par le mobile que par la base. Les trames sont codées sur toute leur longueur selon le code connu dit Manchester. Pour mémoire, il s'agit d'un code dans lequel un bit à 1 ou à 0 est représenté respectivement par une transition vers le haut ou vers le bas. Une telle transition a lieu à un instant imposé par une horloge. Bien entendu, si deux bits identiques se suivent, il y a un front inter-bit entre eux, en dehors d'un instant imposé. Le débit dépend de l'horloge et du microprocesseur utilisé ; par exemple avec un microprocesseur 6805 fonctionnant à 4,9152 MHz, le débit des données est de 833 bits/seconde.

Plusieurs situations sont possibles, notamment :

- 1) avant toute demande d'établissement de lien, l'élément qui désire établir une communication doit rechercher un canal libre, pour éviter de brouiller un autre téléphone sans fil, ou d'être brouillé par lui. Dans ce cas le type de scrutation employé consiste à balayer successivement les canaux pour rechercher un canal libre. A cet effet le niveau de la porteuse est mesuré. Un canal est dit occupé si le niveau de porteuse est supérieur à une valeur de seuil prédéterminé, et libre dans le cas contraire. Il est clair que, dès qu'un canal libre est trouvé, l'élément demandeur peut commencer à émettre.

- 2) en veille, l'un des éléments cherche périodiquement à détecter si l'autre veut établir une liaison avec lui. On dira qu'il s'agit d'une scrutation pour détecter une demande d'établissement de lien. Lors des demandes d'établissement de lien, des trames sont émises en continu par le demandeur (base ou mobile), et le flux de codes Manchester est ininterrompu. Une scrutation consiste alors, pour un élément, à balayer les canaux pour rechercher une telle demande d'établissement de lien, émise dans l'un de ces canaux par l'autre élément. Dans le cas de la base ou d'un mobile posé sur la base, de telles scrutations s'enchaînent sans discontinuité. Au contraire, dans le cas d'un mobile éloigné de sa base, elles sont séparées par des périodes de veille, afin d'augmenter l'autonomie du mobile au détriment du temps de réponse. Une scrutation, de la part du mobile en veille, a lieu par exemple toutes les secondes.

- 3) en cours de communication, il faut tester si la limite de portée est atteinte. Ceci sera également réalisé en comparant le niveau de la porteuse avec un seuil.

Les seuils de décision peuvent être différents dans les trois situations ci-dessus. D'une manière générale, plus ils sont élevés, moins l'appareil est sensible aux perturbations extérieures, mais plus la portée est faible.

Pour mesurer le niveau de la porteuse, un signal redressé dans le circuit 4 ou 111 est reçu par un convertisseur analogique-numérique 20 (base) ou 21 (mobile), pour fournir une valeur numérique, pouvant être exploitée par le processeur 1 ou 8. Ce dernier compare au moyen d'un logiciel la valeur du champ reçu, c'est-à-dire du niveau de porteuse démodulé, convertie en valeur numérique, avec une valeur de seuil prédéterminée, qui se trouve dans une mémoire. Pour chaque canal, la valeur convertie est en outre mémorisée.

Chaque fois qu'une période de scrutation se termine, le processeur teste les différents valeurs de champ reçu, mémorisées, et la plus petite, appelée N_BAS, est sélectionnée. Un nouveau seuil TH_D, destiné à déterminer si un canal est libre ou occupé, est obtenu en additionnant une constante CT à cette valeur :

$$TH\_D = N\_BAS + CT$$

Ce seuil sera utilisé pendant la séquence de scrutation suivante pour déterminer si un canal est libre ou occupé.

Bien entendu, la plupart du temps, il y a des canaux inactifs, et la plus petite valeur reçue correspond donc à du bruit.

La détection du codage Manchester sert uniquement dans la situation 2) ci-dessus.

On appellera "routine", une partie de logiciel de l'un ou l'autre des microprocesseurs, assurant une partie d'un processus.

Une scrutation pour détecter une demande d'établissement de lien, qui peut aussi bien être réalisée par la base que par le mobile, est illustrée par la figure 2, et comporte les étapes suivantes :

- soit N le numéro d'un canal. Une routine SCN commande le positionnement du circuit PLL sur le canal N, et met en service la détection des données : dès qu'une commande positionnant le circuit PLL sur le canal voulu a été envoyée, la routine de décodage des données est initialisée, avant même que le circuit PLL soit verrouillé et que le niveau de porteuse soit stabilisé.
- après un délai D1 de par exemple 20 mS, le niveau de porteuse est mesuré et on teste si le canal est libre ou occupé. Le test, noté L>T, a pour effet que, si le canal est libre, le processus revient à la routine SCN pour passer au canal suivant, et si le canal est occupé, le processeur attend encore, pendant un délai D2 de par exemple 20 mS,
- après ce délai, c'est-à-dire 40mS après le début, le processeur procède au test noté par M?, pour savoir si des données ont été détectées. Pendant le temps D1, lorsque des données sont correctement détectées, ce fait est enregistré par le microprocesseur. Des données sont considérées comme correctement détectées dès que le décodeur a reconnu un nombre prédéterminé de bits consécutifs, par exemple seize bits. Un bit est considéré comme reconnu si une transition est détectée à l'un des instants prévus, indiqués par une horloge. Un dispositif à cet effet peut être aisément réalisé par un homme du métier, par exemple un dispositif qui échantillonne le signal avant et après l'instant en question et en vérifiant que le signal a changé entre les deux échantillons. S'il n'y a pas eu détection de données, le processeur revient à la routine SCN pour passer au canal suivant. S'il y a eu détection de données, alors le processeur attend pendant un nouveau délai D3, puis procède à un test noté LR, pour savoir si une trame de demande d'établissement de lien complète a été obtenue, avec un code d'identification du mobile correct. Dans ce cas la communication CO entre base et mobile est initiée.

Un exemple d'une séquence de scrutation pour détecter une demande d'établissement de lien est illustré par la figure 3. Au temps T1, le circuit PLL est positionné sur un canal, ceci étant illustré par une ligne en trait pointillé, et le circuit de détection des données est mis en service, ceci étant illustré par une ligne en trait mixte. Au temps T2, en 13, la présence d'une porteuse est testée. On suppose que dans le cas présent il n'y a pas de porteuse (donc pas de demande d'établissement de lien sur ce canal) ; alors le canal suivant est choisi, ceci étant illustré par deux lignes placées plus bas, au delà de T2. Au temps T3, en 14, la présence d'une porteuse est à nouveau testée ; on suppose que dans le cas présent il n'y a toujours pas de porteuse. Alors le canal suivant est choisi, ceci étant illustré par deux lignes placées encore plus bas au delà de T3. Au temps T4, en 15, on suppose qu'une porteuse est détectée ; la fréquence n'est donc pas changée (les deux traits continuent à la même hauteur). Au temps T5, en 16, le décodage de données est testé. On suppose que dans le cas présent aucun décodage n'a été réalisé ; alors le canal suivant est choisi, ceci étant illustré par le fait que les deux lignes, après le temps T5, sont placées plus bas. Au temps T6, on suppose que l'opération 17 constate qu'il y a une porteuse ; la fréquence n'est donc pas changée (les deux traits continuent à la même hauteur). Au temps T7, en 18, le décodage de données est testé. On suppose que des données Manchester ont été reconnues ; alors la fréquence ne change pas (trait en pointillé) et la détection de données se poursuit (trait mixte). En 19 il est constaté qu'une trame de demande d'établissement de lien complète a été reçue.

A chaque fois le temps entre T1 et T2, T2 et T3, etc, est de 20 mS. Donc le temps passé sur chaque canal est de 20mS dans le cas d'un canal libre, ou de 40mS dans le cas d'un canal occupé sans données codées Manchester. Pour dix canaux, dans le cas, le plus fréquent, où aucun canal n'est occupé, la scrutation dure 10 × 20 mS, c'est-à-dire seulement 200 mS. Pour mémoire, si l'on attendait une trame complète pour prendre une décision, le temps passé dans le cas d'un canal occupé serait de 110 mS (90+20 mS) pour chaque canal. Grâce à un temps de scrutation plus court, il est possible soit d'augmenter le nombre de canaux, soit de diminuer le temps total de scrutation, c'est-à-dire la consommation d'énergie, et donc d'augmenter l'autonomie du mobile en veille. Bien entendu, les temps de 20 mS indiqués ci-dessus sont des ordres de grandeur ; l'expérience permet de déterminer facilement, pour un appareil déterminé, quelle est la durée minimale nécessaire pour obtenir un fonctionnement sûr.

**Revendications**

1. **Protocole de transmission** de signaux numériques de signalisation dans un appareil téléphonique dit sans-fil, comprenant une partie, dite base, et une partie, dite mobile ;

   la base et le mobile comportant chacun un circuit d'émission/réception pour émettre ou recevoir les dits signaux numériques par voie hertzienne, au moyen d'une porteuse modulée, pour laquelle plusieurs canaux sont prévus, qui diffèrent par leur fréquence ;
   protocole dans lequel la base et le mobile, en dehors d'une communication, procèdent périodiquement à un test appelé scrutation, pour déterminer si un signal hertzien est émis, test dans lequel le circuit de réception est d'abord positionné sur un canal, puis au bout d'un délai prédéterminé dit premier délai, la présence d'une émission est testée en comparant une valeur de mesure du champ reçu avec un seuil prédéterminé et, s'il n'y a pas d'émission, le circuit de réception est positionné sur un canal suivant, **caractérisé en ce que**, pendant la scrutation, la valeur du champ est relevée pour chacun des canaux successivement utilisés, la valeur la plus petite parmi ces différentes valeurs est finalement sélectionnée, une valeur fixe y est ajoutée, et la valeur ainsi obtenue est prise comme valeur du dit seuil prédéterminé.

2. **Protocole** selon la revendication 1, **caractérisé en ce que** les signaux numériques sont tous codés de la même manière et, au cours d'une scrutation destinée à rechercher si une autre partie veut établir une liaison, un décodeur pour décoder les dits signaux numériques est mis en service dès le début de la scrutation, et lorsqu'une émission est considérée comme reçue au bout du premier délai, le décodeur est laissé en service puis, au bout d'un délai prédéterminé, dit second délai, on vérifie si le décodeur a bien reconnu le codage du signal reçu, et

   - si le décodeur a bien reconnu le codage, on le laisse continuer à décoder,
   - si le décodeur n'a pas reconnu le codage, le circuit de réception est positionné sur un canal suivant, pour y appliquer le même processus.

3. **Protocole** selon la revendication 2, **caractérisé en ce que** la totalité des signaux numériques de signalisation est codée en codage de type Manchester, et un bit d'un signal numérique de signalisation est considéré comme reconnu si une transition est détectée à un instant prévu, indiqué par une horloge.

4. **Protocole** selon la revendication 3, **caractérisé en ce que** le codage du signal reçu est considéré comme reconnu par le décodeur si un nombre prédéterminé de bits consécutifs ont été reconnus.

5. **Protocole** selon la revendication 1, **caractérisé en ce que** la durée du premier délai est de une à trois dizaines de millisecondes.

6. **Protocole** selon la revendication 2, **caractérisé en ce que** la durée du second délai prédéterminé est de une à trois dizaines de millisecondes.

7. **Système téléphonique**, comprenant une partie, dite base, et une partie, dite mobile, la base et le mobile comportant tous deux un circuit de transmission pour émettre ou recevoir des signaux numériques par voie hertzienne, au moyen d'une porteuse modulée, pour laquelle plusieurs canaux sont prévus, qui diffèrent par leur fréquence, la base et le mobile étant munis chacun de moyens pour positionner le circuit de réception sur un canal, de moyens pour, au bout d'un délai prédéterminé dit premier délai, tester s'il y a une émission en vérifiant si la valeur du champ reçu dépasse un seuil prédéterminé et, s'il n'y a pas d'émission, positionner le circuit de réception sur un canal suivant, **caractérisé en ce qu'**un processeur dans la base et un processeur dans le mobile comportent chacun un programme pour relever les différentes valeurs de champ qui sont mesurées pour chacun des canaux, et pour déterminer le seuil en ajoutant une valeur fixe à la plus petite valeur de champ ainsi relevée.

8. **Système téléphonique** selon la revendication 7, **caractérisé en ce que** les signaux numériques sont tous codés de la même manière et chaque processeur est muni de moyens pour mettre en service dès le début d'une scrutation un décodeur pour décoder les dits signaux numériques, afin d'essayer de décoder un éventuel signal numérique reçu, de moyens pour, lorsqu'une émission est considérée comme reçue au bout du premier délai, laisser fonctionner le décodeur pendant encore un délai prédéterminé, dit second délai, et de moyens pour, au bout du second délai, vérifier si le décodeur a reconnu le codage du signal reçu et dans ce cas le laisser fonctionner, ou bien, si le décodeur n'a pas reconnu le codage du signal reçu, positionner le circuit de réception sur un canal suivant.

9. **Base pour un système téléphonique** selon la revendication 7, caractérisée en ce que son processeur comporte un programme pour relever les différentes valeurs de champ qui sont mesurées pour chacun des canaux, et pour déterminer un seuil en ajoutant une valeur fixe à la plus petite valeur de champ ainsi relevée.

10. **Base pour un système téléphonique** selon la revendication 8, caractérisée en ce qu'elle est munie de moyens pour, à un instant prévu indiqué par une horloge, détecter une transition dans un signal reçu, et pour indiquer alors au processeur qu'un bit du signal reçu a été décodé.

11. **Base pour un système téléphonique** selon la revendication 10, caractérisée en ce que son processeur comporte un programme pour compter le nombre de bits consécutifs décodés.

12. **Mobile pour un système téléphonique** selon la revendication 7, **caractérisé en ce que** son processeur comporte un programme pour relever les différentes valeurs de champ qui sont mesurées pour chacun des canaux, et pour déterminer un seuil en ajoutant une valeur fixe à la plus petite valeur de champ ainsi relevée.

13. **Mobile pour un système téléphonique** selon la revendication 8, **caractérisé en ce qu'il** est muni de moyens pour, à un instant prévu indiqué par une horloge, détecter une transition dans un signal reçu, et pour indiquer alors au processeur qu'un bit du signal reçu a été décodé.

14. **Mobile pour un système téléphonique** selon la revendication 13, **caractérisé en ce que** son processeur comporte un programme pour compter le nombre de bits consécutifs décodés.

FIG. 1A

FIG. 1B

FIG. 2

FIG. 3

Office européen
des brevets

**RAPPORT DE RECHERCHE EUROPEENNE**

Numero de la demande

EP 96 20 2795

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | WO 94 24832 A (MOTOROLA INC) 27 Octobre 1994 | 7 | H04Q7/32 H04M1/72 |
| Y | * page 16, ligne 25 - page 19, ligne 6 * * page 22, ligne 1 - ligne 31; revendication 3; figure 5 * --- | 1-6,8-14 | |
| Y | EP 0 200 209 A (NIPPON ELECTRIC CO) 5 Novembre 1986 * page 6, ligne 15 - page 8, ligne 6; figure 2 * --- | 1-6,8-14 | |
| Y | EP 0 522 885 A (NIPPON ELECTRIC CO) 13 Janvier 1993 * le document en entier * --- | 1-6,8-14 | |
| A | DE 27 16 650 B (STANDARD ELEKTRIK LORENZ AG) 6 Avril 1978 * colonne 1, ligne 1 - colonne 2, ligne 45 * --- | 1-4,8, 10,11, 13,14 | |
| A | WO 94 00946 A (MOTOROLA INC) 6 Janvier 1994 * page 12, ligne 20 - page 13, ligne 5 * ----- | 3 | DOMAINES TECHNIQUES RECHERCHES (Int.Cl.6) H04Q H04M |

Le présent rapport a été établi pour toutes les revendications

| Lieu de la recherche | Date d'achèvement de la recherche | Examinateur |
|---|---|---|
| LA HAYE | 29 Janvier 1997 | Janyszek, J-M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)